# EUROPEAN PATENT SPECIFICATION

(11) **EP 4 530 129 B1**
(45) Date of publication and mention of the grant of the patent: **25.02.2026**
(21) Application number: 24201322.5
(22) Date of filing: 19.09.2024
(51) Int. Cl.: B60R 1/04, B60R 1/08, H04N 23/71, B60R 1/12

(54) **CONTROLLER, CONTROL SYSTEM AND CONTROL METHOD**
STEUERGERÄT, STEUERUNGSSYSTEM UND STEUERUNGSVERFAHREN
CONTRÔLEUR, SYSTÈME DE COMMANDE ET PROCÉDÉ DE COMMANDE

(30) Priority: 28.09.2023 JP 2023167611
(43) Date of publication of application: 02.04.2025
(73) Proprietor: Alps Alpine Co., Ltd., Ota-ku, Tokyo 145-8501 (JP)
(72) Inventor: Sato, Tetsuo, Iwaki-city, Fukushima (JP)
(74) Representative: Schmitt-Nilson Schraud Waibel Wohlfrom Patentanwälte Partnerschaft mbB

(56) References cited:
- JP-A- 2010 173 460
- JP-A- 2021 172 243
- US-A1- 2020 164 807

## Description

The present invention relates to a controller, a control system and a control method, and is particularly suitable for use in a controller that executes a process related to a mirror provided in a vehicle and configured to be capable of changing reflectance, a control system including the controller and the mirror, and a control method using the controller.

Conventionally, regarding a mirror provided in a vehicle cabin (which is called a rearview mirror), a mirror having an anti-glare function is known. JP 2010-173460 A discloses a following technology relating to this type of mirror. That is, the mirror 2 of JP 2010-173460 A is provided with an ambient light quantity sensor 31 for detecting the quantity of light incident from the front of the vehicle, and a rear light quantity sensor 32 for detecting the quantity of light incident from the rear of the vehicle. When the quantity of light detected by the rear light quantity sensor 32 is larger than the quantity of light detected by the ambient light quantity sensor 31, the mirror 2 is controlled so that the mirror 2 is automatically in the anti-glare state. JP 2010-173460 A discloses the above technology. According to this configuration, when light from headlights of the following vehicle enters the mirror 2 during night driving, the mirror 2 is automatically in the anti-glare state, and a convenience of a driver can be improved. As described in JP 2010-173460 A, it is widely used to provide two sensors on the mirror for detecting the quantity of light incident from the front and rear of the vehicle, and to automatically control the anti-glare based on a difference in the quantity of light detected by these sensors.

JP 2021-172243 A discloses a technology for setting an anti-glare duration against the following vehicle, which is a duration during which anti-glare is expected to be necessary, based on a result of imaging by the rear camera 4, and for reducing brightness of an image captured by the rear camera 4 during this period.

In the mirror of JP 2010-173460 A in which anti-glare control is performed by two light quantity sensors provided in the mirror, there were following problems. Namely, it was necessary to design the mirror in consideration of a presence of two light quantity sensors, and the presence of two light quantity sensors to be provided in the mirror was a constraint in the design. Also, since there is generally a room lighting in vicinity of the mirror, it was necessary to design the mirror in consideration of the effect of light from the room lighting when the room lighting is turned on, and it was difficult to design the mirror. In view of the above circumstances, it has been required to automatically perform anti-glare control without providing a light quantity sensor in the mirror. However, if appropriateness of anti-glare is lost due to not providing the light quantity sensor in the mirror, the anti-glare control approach is ineffective. Therefore, it is required to realize an appropriate anti-glare control in which the driver does not feel excessive glare. US 2020/164807 A1 relates to a system for variable transmittance mirrors which may be controlled in response to images captured from a camera. The controller is configured to assign a first light intensity value to one or more pixels and change the first level of transmittance to a second level of transmittance based at least in part on the detected first light intensity. Such a system has the advantage of eliminating the need for a dedicated glare sensor, therefore reducing the number of devices, the costs, obstructions in a user's field of view, and a more aesthetically appealing appearance. US 2020/164807 A1 discloses the preambles of claim 1 and 9.

It is an object of the present invention to make it possible to automatically perform anti-glare control without providing a light quantity sensor for a mirror, and to further realize appropriate anti-glare.

The present disclosure relates to a controller, and a method according to the appended claims. Embodiments are disclosed in the dependent claims. According to the invention a controller for performing processes related to a mirror which is provided in a vehicle cabin and configured to be capable of changing reflectance, includes a control unit configured to acquire a captured image based on a result of imaging by a camera configured to capture an image of a view behind the vehicle; and to determine a mirror reflectance, which is the reflectance of the mirror, based on a state of luminance of the captured image.

According to the invention, the degree of reflectance to be applied to the mirror in order to realize appropriate anti-glare is determined in accordance with the state of light and dark in an actual environment behind the vehicle. In addition, the state of luminance of the captured image based on the result of imaging by a camera configured to capture an image of a view behind the vehicle changes in accordance with the state of light and dark in an actual environment behind the vehicle. Then, it is possible to understand from the state of luminance of the captured image how much the mirror reflectance should be to realize appropriate anti-glare. In view of the foregoing, according to aspects of the present invention as described above, since the mirror reflectance is determined based not on the light quantity sensor provided on the mirror but on the brightness of the image captured by the camera which captures an image of the rear of the vehicle, the anti-glare control can be automatically performed without providing the light quantity sensor on the mirror, and an appropriate anti-glare can be realized.
FIG. 1 is an external view of the mirror according to one embodiment,
FIG. 2 is a block diagram illustrating an example of the functional configuration of the controller according to one embodiment,
FIG. 3 is a flowchart illustrating an example of the operation of the controller according to one embodiment,
FIG. 4 is a flowchart illustrating an example of the operation of the controller according to one embodiment,
FIG. 5 is a drawing illustrating an exemplary captured image,
FIG. 6A is a drawing illustrating an example of the captured image,
FIG. 6B is a drawing illustrating a histogram of the luminance of each pixel of the attention line of the captured image,
FIG. 7 is a flowchart illustrating an example of operation of a controller according to one embodiment,
FIG. 8 is a drawing illustrating exemplary relation defining information,
FIG. 9 is a drawing illustrating a variation of an attention line,
FIG. 10 is a flowchart illustrating an example of operation of a controller according to a first variation,
FIG. 11 is a drawing illustrating an exemplary captured image,
FIG. 12 is a drawing used for explaining a maximum average luminance difference deriving process,
FIG. 13 is a drawing illustrating a variation of a group of attention lines,
FIG. 14A is a drawing illustrating one variation of a block aspect, and
FIG. 14B is a drawing illustrating another variation of the block aspect.

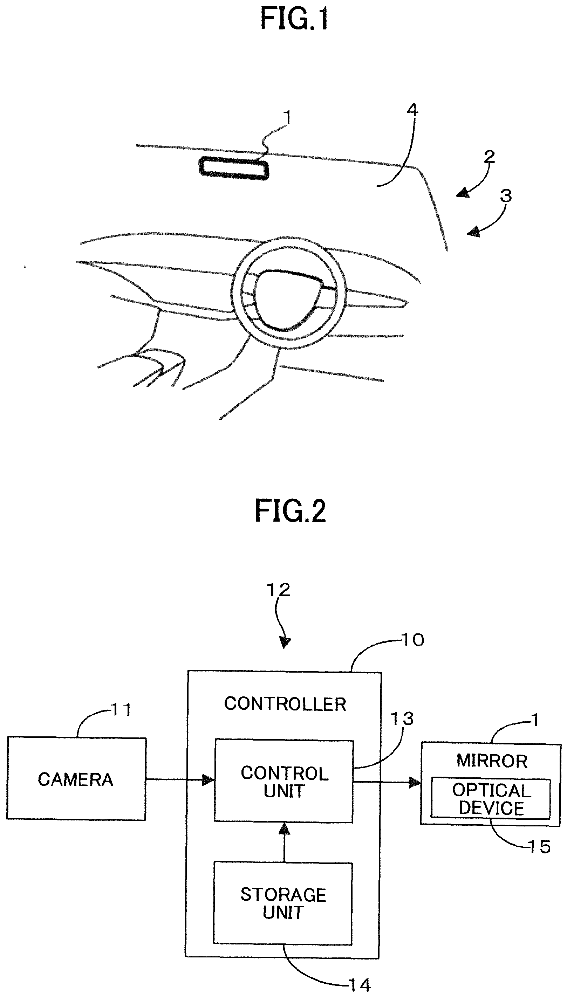

In the following, embodiments of the present invention will be described with reference to the accompanying drawings. FIG. 1 is an external view of a mirror 1 according to an embodiment. The mirror 1 may be what is called a rearview mirror provided in a cabin 3 of a vehicle 2. The mirror 1 is provided at a position in proximity to a windshield 4 of the ceiling of the cabin 3. The mirror 1 is used at least for rear confirmation by a driver. In a situation where the vehicle is traveling at night, in a situation where the vehicle is traveling in a tunnel, or in a situation where the outside of the vehicle 2 is dark, headlights of a following vehicle may be incident on the mirror 1. In addition, light may be incident on the mirror 1 from the rear of the vehicle 2 for some reason. If no action is taken in this regard, the driver may feel excessive glare. In light of this, the mirror 1 according to the present embodiment is configured so that its reflectance can be changed, and has an automatic anti-glare function. The automatic anti-glare function is a function to change the reflectance of the mirror 1 automatically to suppress the glare felt by the driver. The automatic anti-glare function will be described in detail later.

FIG. 2 is a block diagram illustrating an example of a functional configuration of a controller 10 according to an embodiment. As shown in FIG. 2, the mirror 1 and the camera 11 are connected to the controller 10. The controller 10, the mirror 1, and the camera 11 constitute a control system 12 related to the present embodiment.

As shown in FIG. 2, the functional configuration of the controller 10 includes a control unit 13 and a storage unit 14. The control unit 13 includes a processing unit and a primary storage unit. The processing unit is a device having an information processing function and includes a CPU. The CPU includes a central control unit, an arithmetic unit, a register, and a cache memory. The primary storage unit includes a DRAM or other volatile memory. The control unit 13 executes the process by reading the program stored in the storage unit 14 into the primary storage device and executing the program. That is, the control unit 13 executes the process in cooperation with hardware and software. The storage unit 14 includes a hard disk drive (or other magnetic storage device), a ROM, a flash memory, or other nonvolatile memory. The storage unit 14 stores data in the nonvolatile memory.

The camera 11 is an imaging device to capture images of a view behind the vehicle 2. The camera 11 is provided at a position where the images of a view behind the vehicle 2 can be captured. For example, the camera 11 is provided on the rear bumper, roof top or license plate outside the vehicle, or on the inner upper part of the rear glass inside the vehicle. The camera 11 continuously performs imaging at least while the driver is driving (regardless of whether the vehicle 2 is stopped), and outputs captured images F based on the result of imaging to the control unit 13 at a predetermined frame rate (for example, 60 fps).

The mirror 1 includes an optical device 15 including a liquid crystal panel. The control unit 13 can change the reflectance of the mirror 1 by changing the transmittance of the liquid crystal panel of the optical device 15 via a drive circuit (not shown). Hereinafter, the reflectance of the mirror 1 will be specifically referred to as "mirror reflectance". In the present embodiment, the control unit 13 can change the mirror reflectance within a range of 0-100%.

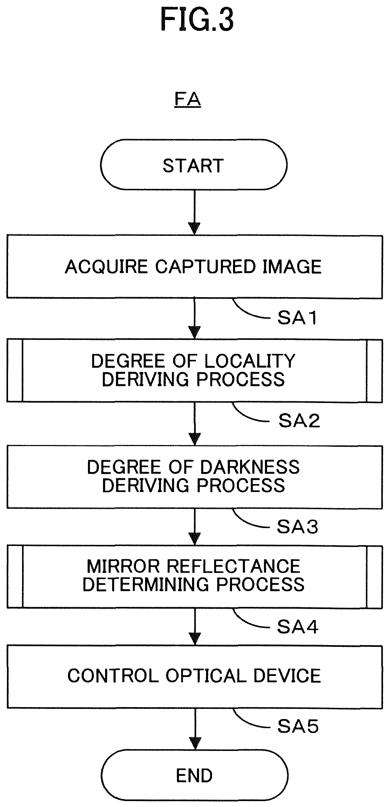

Next, an operation of the controller 10 related to the automatic anti-glare function will be described. FIG. 3 is a flowchart illustrating an example of an operation of the controller 10 showing the process executed by the controller 10 relating to the automatic anti-glare function while the vehicle 2 is running (regardless of whether the vehicle 2 is stopped). The flowchart FA in FIG. 3 shows a control method performed by the controller 10. As described above, the camera 11 outputs the captured image F based on the result of imaging at a predetermined frame rate to the control unit 13. The control unit 13 executes the process shown in the flowchart FA each time the captured image F is acquired at a predetermined frame rate.

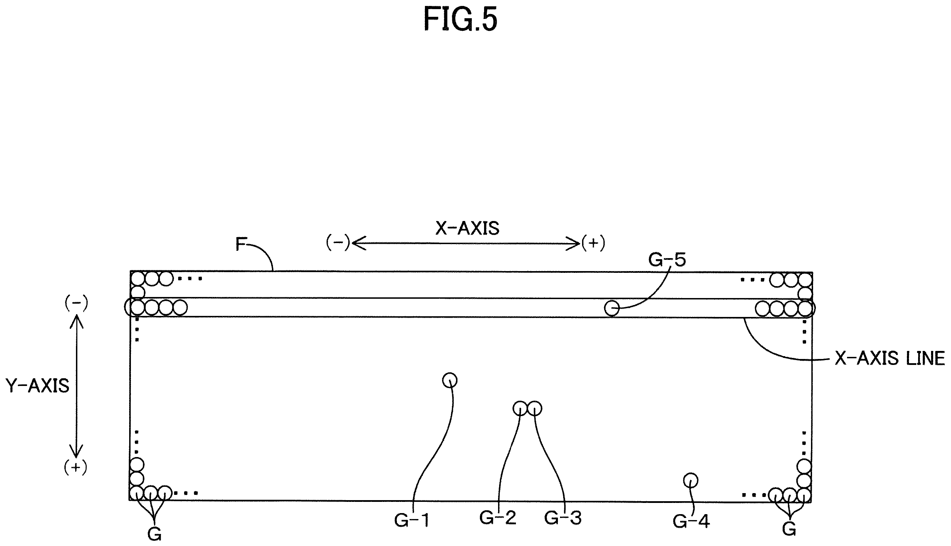

As shown in FIG. 3, the control unit 13 inputs and acquires the captured image F from the camera 11 (step SA1). In the present embodiment, the captured image F is image data in which pixels G (FIG. 5) holding RGB gradation values (hereinafter referred to as "pixel values") are arranged in a matrix. In step SA1, the captured image F is developed in an image buffer that can be referred to by the control unit 13.

Next, the control unit 13 executes the degree of locality deriving process (step SA2). The degree of locality deriving process is a process in which the control unit 13 derives a "degree of locality" that is the degree to which the situation that the rear part of the vehicle is locally bright is satisfied based on the state of the luminance of the captured image F. In the present embodiment, the control unit 13 derives a "maximum luminance difference" that is the difference in luminance between the pixel with the largest luminance and the pixel with the smallest luminance among the pixels on an attention line, which is a line extending in a predetermined direction on the captured image F, as a degree of locality. The degree of locality deriving process will be described in detail below.

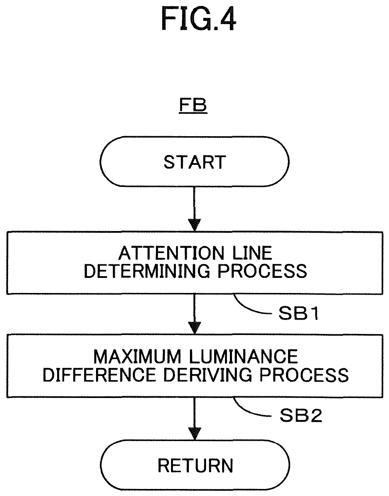

The flowchart FB of FIG. 4 is a flowchart illustrating the details of the degree of locality deriving process. As shown in FIG. 4, in the degree of locality deriving process, the control unit 13 first executes an attention line determining process (step SB1). The attention line determining process is a process for determining an attention line (described later). Hereinafter, the attention line determining process will be described in detail.

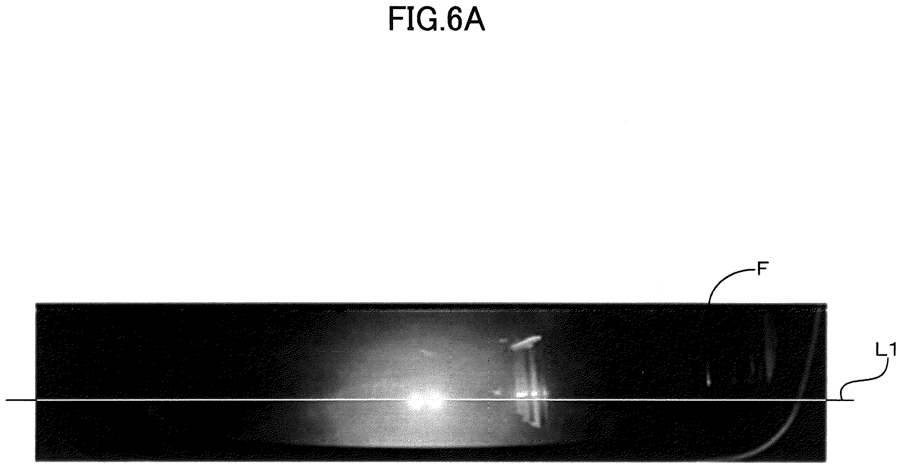

FIG. 5 is a drawing illustrating a captured image F in a manner suitable for explanation. The captured image F is configured by arranging pixels G in a matrix in the x-axis direction (a direction corresponding to the horizontal direction of the captured scenery) and the y-axis direction (a direction corresponding to the vertical direction of the captured scenery). In FIG. 5, with the upper left corner of the captured image F as the origin, the direction toward the right in the x-axis direction is the plus side of the x-axis, the direction toward the left is the minus side of the x-axis, and the direction toward the bottom in the y-axis direction is the plus side of the y-axis, and the direction toward the top is the minus side of the y-axis. The same applies to FIG. 6A, 6B, 9 and 11-14B. In the present embodiment, as shown in FIG. 5, a line of pixels G in one row extending from end to end in the x-axis direction is defined as an "x-axis line" in the captured image F. The captured image F is composed of a predetermined number of x-axis lines.

In the process of step SB1, the control unit 13 specifies the pixel having the highest luminance (hereinafter referred to as "highest luminance pixel") among the pixels constituting the captured image F. The control unit 13 derives the luminance of a certain pixel from the pixel value of that pixel using a predetermined calculation formula. In the present embodiment, the luminance takes a value in the range of 0-255 pt (pt is a unit added for convenience) . When the highest luminance pixel is one pixel, or when all the highest luminance pixels belong to one x-axis line, the control unit 13 determines the x-axis line including the highest luminance pixel as the attention line.

Conversely, when a plurality of highest luminance pixels exist and exist on different x-axis lines, the control unit 13 determines the attention line by the following method. That is, when the x-axis line having the largest number of contained highest luminance pixels (hereinafter referred to as "the maximum x-axis line") can be reduced to one, the control unit 13 determines the maximum x-axis line as the attention line. For example, referring to FIG. 5, it is assumed that pixels G-1, G-2, and G-3 are the highest luminance pixels. The pixels G-2 and G-3 belong to the same x-axis line. In this case, the control unit 13 determines the x-axis line including the pixels G-2 and G-3 as the attention line.

Conversely, when the maximum x-axis line cannot be reduced to one, that is, when there are two or more maximum x-axis lines, the control unit 13 determines the maximum x-axis line including the highest brightness pixel most proximate to a specific position among the maximum x-axis lines as the attention line. In the present embodiment, the specific position is the center position of the captured image F. For example, referring to FIG. 5, it is assumed that the pixels G-1, G-4, and G-5 are the highest brightness pixels. In this case, the control unit 13 determines the x-axis line including **the pixel** G-1 as the attention line. This is because the pixel G-1 among the pixels G-1, G-4, and G-5 is the most proximate to the specific position (= the center position of the captured image F). The reason why the specific position is "the center position of the captured image F" is that the position of the headlights of the following vehicle is assumed. Based on this, the specific position may be a position corresponding to the "position of the headlights of the following vehicle" and different from the "center position of the captured image F".

Note that there may be a plurality of maximum x-axis lines including the highest luminance pixel most proximate to the specific position. In this case, the control unit 13 determines an arbitrary maximum x-axis line as the attention line among the plurality of maximum x-axis lines including the highest luminance pixel most proximate to the specific position.

As described above, in the attention line determining process of step SB1, the control unit 13 determines the attention line.

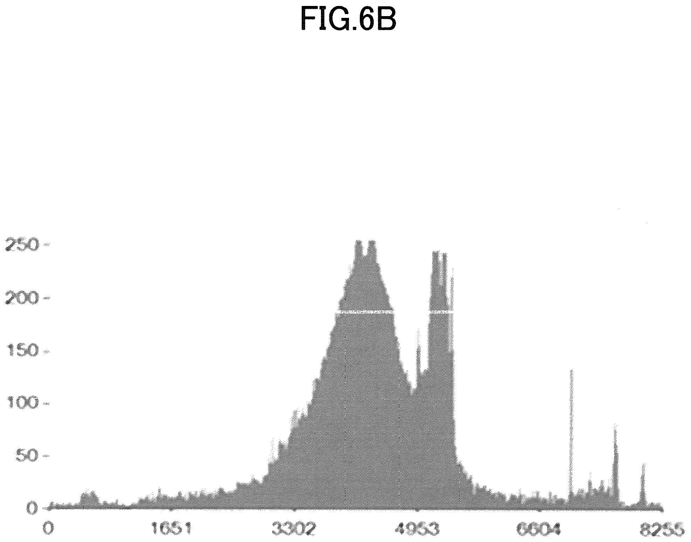

After processing step SB1, the control unit 13 executes the maximum luminance difference deriving process (step SB2). In the maximum luminance difference deriving process, the control unit 13 derives the difference in luminance between the pixel G having the largest luminance and the pixel G having the smallest luminance among the pixels G on the attention line determined in step SB1, and sets the difference as the maximum luminance difference. FIG. 6A is a drawing illustrating an example of a captured image F. In FIG. 6A, a symbol L1 indicates an attention line. FIG. 6B is a histogram of the luminance of each pixel G on the attention line L1 of the captured image F shown in FIG. 6A.

For the image shown in FIG. 6A, the luminance of the pixel G having the largest luminance is 255 pt, and the luminance of the pixel G having the smallest luminance is 3 pt. When the captured image F acquired in step SA1 is the image shown in FIG. 6A, the control unit 13 derives 252 pt (255 - 3 pt) as the maximum luminance difference in the maximum luminance difference deriving process.

It can be said that the larger the maximum luminance difference, the higher the probability that the situation is that the rear of the vehicle 2 is locally bright. Then, there is a correlation between the magnitude of the maximum luminance difference and the degree to which the situation that the rear of the vehicle 2 is locally bright is satisfied (degree of locality) such that the greater the maximum luminance difference, the greater the degree of locality. Therefore, the maximum luminance difference can be used as an index value indicating the degree of locality within a range of 0-255 pt. Based on the above, in step SB2, the control unit 13 derives the maximum luminance difference as the degree of locality.

As described above, in the degree of locality deriving process of step SA2, the control unit 13 derives the maximum luminance difference. Hereinafter, the maximum luminance difference derived in the degree of locality deriving process is referred to as the "derived maximum luminance difference".

Returning to the flowchart FA of FIG. 3, after executing the degree of locality deriving process of step SA2, the control unit 13 executes the degree of darkness deriving process (step SA3). In the degree of darkness deriving process, the control unit 13 derives the "degree of darkness", which is the overall degree of darkness of the scenery recorded in the captured image F, based on the state of the luminance of the captured image F. In the present embodiment, the control unit 13 derives the average value of the luminance of the pixels G constituting the attention line (hereinafter referred to as the "line average value") as the degree of darkness. For example, when the captured image F acquired in step SA1 is the captured image F shown in FIG. 6A, the control unit 13 derives the line average value, which is the average value of the luminance of all the pixels G constituting the attention line L1 in FIG. 6A, as the degree of darkness. Hereinafter, the line average value derived in the degree of darkness deriving process is referred to as the "derived line average value".

Here, there is a correlation between the line average value and the degree (degree of darkness) of "the overall darkness of the scenery recorded in the captured image F (= the darkness of the actual environment behind the vehicle 2)" in which the degree of darkness increases as the line average value decreases. Therefore, the line average value can be used as an index value indicating the degree of darkness within a range of 0-255 pt. Based on the above, in step SA3, the control unit 13 derives the line average value as the degree of darkness based on the luminance status of the captured image F.

After executing the degree of darkness deriving process in step SA3, the control unit 13 executes the mirror reflectance determining process (step SA4). The mirror reflectance determining process is a process for determining the mirror reflectance to be actually applied. Hereinafter, the "actually applied mirror reflectance" determined in step SA4 is referred to as the "applied mirror reflectance" and is distinguished from the mirror reflectance in general. Hereinafter, the mirror reflectance determining process will be described in detail.

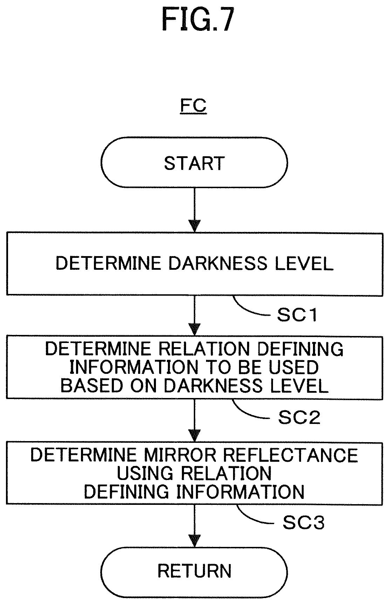

A flowchart FC in FIG. 7 is a flowchart illustrating details of a mirror reflectance determining process. As shown in FIG. 7, in the mirror reflectance determining process, the control unit 13 first determines the level of the derived line average value (hereinafter referred to as "darkness level") (step SC1). In the present embodiment, the control unit 13 determines the darkness level as level LV1 when the derived line average value is 0-85 pt, determines the level LV2 when the derived line average value is 86-170 pt, and determines the level LV3 when the derived line average value is 171-255 pt. The level LV1 is the smallest level and indicates that the darkness outside the vehicle is the darkest. Conversely, the level LV3 is the largest level and indicates that the darkness outside the vehicle is the brightest. The relation between the range of the line average value and the darkness level exemplified in the present embodiment is merely a simplified example. The relation should be appropriately determined in advance based on a test or simulation from the viewpoint of realizing appropriate anti-glare.

Next, the control unit 13 determines the relation defining information to be used based on the darkness level (step SC2). In the present embodiment, the relation defining information is prepared for each darkness level (level of degree of darkness). Specifically, the first relation defining information corresponding to darkness level: level LV1, the second relation defining information corresponding to darkness level: level LV2, and the third relation defining information corresponding to darkness level: level LV3 are prepared. The control unit 13 determines the first relation defining information as the relation defining information to be used when the darkness level is level LV1, determines the second relation defining information as the relation defining information to be used when the darkness level is level LV2, and determines the third relation defining information as the relation defining information to be used when the darkness level is level LV3. Hereinafter, the relation defining information determined here is referred to as "use relation defining information".

Hereinafter, the relation defining information will be described. The relation defining information defines the relation between the maximum luminance difference and the mirror reflectance. The mirror reflectance corresponding to the maximum luminance difference of a certain value means the mirror reflectance for realizing appropriate anti-glare when the maximum luminance difference is the one value. In the relation defining information, the mirror reflectance is associated with each possible value of the maximum luminance difference. Therefore, an arbitrary maximum luminance difference can be converted into the mirror reflectance by using the relation defining information.

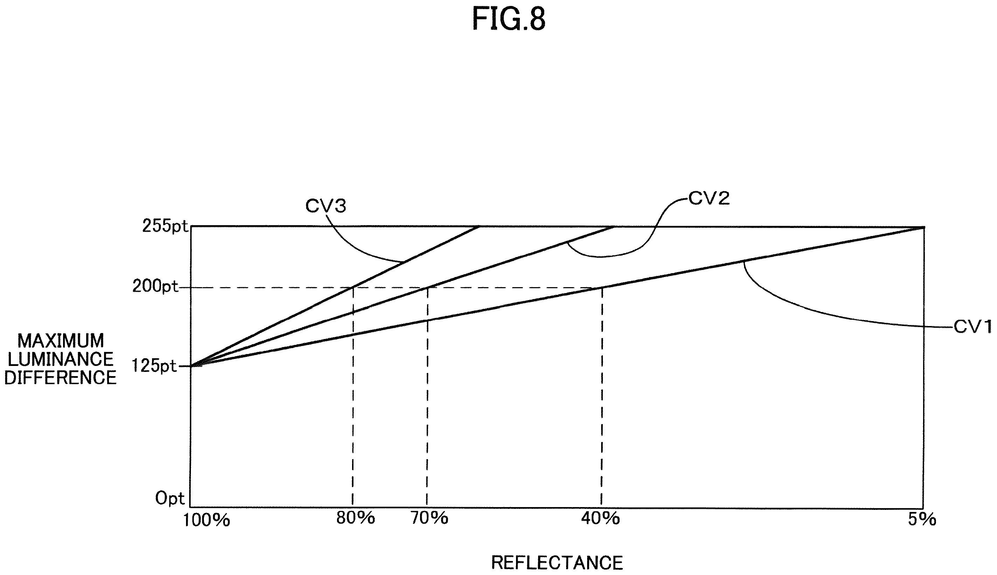

In FIG. 8, the first to third relation defining information is shown by a curve on the coordinates where the horizontal axis is the mirror reflectance and the vertical axis is the maximum luminance difference. In FIG. 8, a curve CV1 shows the first relation defining information, a curve CV2 shows the second relation defining information, and a curve CV3 shows the third relation defining information. Focusing on the curve CV1 in FIG. 8, in the first relation defining information, the maximum luminance difference: 200 pt is associated with the mirror reflectance: 40%. This means that when the first relation defining information is used to determine the mirror reflectance, the maximum luminance difference: 200 pt is converted to the mirror reflectance: 40%. Further, as shown by the curve CV1, in the first relation defining information, the relation is established such that the larger the maximum luminance difference, the smaller the mirror reflectance. This relation is also established for the second and third relation defining information.

As is clear from the curves CV1 to CV3 in FIG. 8, when the maximum luminance difference is the same, "Mirror reflectance of the first relation defining information < Mirror reflectance of the second relation information < Mirror reflectance of the third relation defining information" is obtained. For example, for a maximum luminance difference of 200 pt, the mirror reflectance corresponding to the first relation defining information is 40%, the mirror reflectance corresponding to the second relation defining information is 70%, and the mirror reflectance corresponding to the third relation defining information is 80%, which is "the mirror reflectance of the first relation defining information (40%) < the mirror reflectance of the second relation defining information (70%) < the mirror reflectance of the third relation defining information (80%)". In the present embodiment, when the maximum luminance difference is 125 pt or less for all of the first to third relation defining information, the reflectance is 100%.

After processing step SC2, the control unit 13 determines the applied mirror reflectance based on the use relation defining information (step SC3). Specifically, the control unit 13 converts the derived maximum luminance difference into a mirror reflectance by using the use relation defining information, and determines this as the applied mirror reflectance. For example, referring to FIG. 8, when the use relation defining information is the first relation defining information and the maximum luminance difference is 200 pt, the control unit 13 determines the applied mirror reflectance to be 40%. For example, when the use relation defining information is the third relation defining information and the maximum luminance difference is 200 pt, the control unit 13 determines the applied mirror reflectance to be 80%. The foregoing is the content of the mirror reflectance determining process.

As described above, when focusing on one type of relation defining information, in the relation defining information, the larger the maximum luminance difference is, the smaller the mirror reflectance is. That is, when the darkness levels are the same, the control unit 13 determines the mirror reflectance so that the larger the maximum luminance difference (degree of locality) is, the smaller the reflectance becomes. This is because of the following reasons. That is, the larger the maximum luminance difference, the higher the probability that the situation (for example, when the outside of the vehicle is dark, the light of the headlights of the following vehicle is projected toward the vehicle 2) is such that the rear of the vehicle 2 is locally bright. Therefore, in order to realize appropriate anti-glare, the larger the maximum luminance difference, the lower the mirror reflectance is basically required. For the above reasons, the control unit 13 determines the mirror reflectance so that the reflectance decreases as the maximum luminance difference (degree of locality) increases.

As described above, the control unit 13 determines the first relation defining information as the use relation defining information when the darkness level is level LV1, determines the second relation defining information as the use relation defining information when the darkness level is level LV2, and determines the third relation defining information as the use relation defining information when the darkness level is level LV3. When the maximum luminance difference is the same, the result is "Mirror reflectance of the first relation defining information < Mirror reflectance of the second relation information < Mirror reflectance of the third relation defining information." That is, the control unit 13 determines the mirror reflectance so that the smaller the derivation line average value (level) (= the greater the darkness level), the smaller the reflectance even when the maximum luminance difference is the same. This is because of the following reasons.

That is, the smaller the derivation line average value is, the darker the actual environment behind the vehicle 2 (hereinafter referred to as "outside environment") is. If the situation of the light emitted from behind the vehicle 2 toward the vehicle 2 is the same, the darker the outside environment, the greater the degree to which the driver feels glare by the light reflected by the mirror 1 when the reflectance is 100%. Therefore, in order to accurately suppress the glare felt by the driver, even if the maximum luminance difference is the same, the smaller the derivation line average value (i.e., the greater the degree of darkness), the smaller the reflectance must be. For the above reasons, the control unit 13 determines the mirror reflectance so that the smaller the derived line average value (i.e., the larger the degree of darkness), the smaller the reflectance becomes even if the maximum luminance difference is the same.

The foregoing is the mirror reflectance determining process. As described above, in the mirror reflectance determining process of step SA4, the controller 10 determines the applied mirror reflectance based on the luminance status of the captured image F.

After processing step SA4, the control unit 13 controls the optical device 15 of the mirror 1 so that the mirror reflectance of the optical device 15 becomes the applied mirror reflectance determined in step SA4 (step SA5).

Since the foregoing process is executed in cycles according to the frame rate, the mirror reflectance of the mirror 1 is automatically and dynamically adjusted to an appropriate value determined in the cycles based on the luminance status of the captured image F.

As described above, the controller 10 includes the control unit 13 for acquiring the captured image F based on the result of imaging of the camera 11 for capturing an image of a view behind the vehicle 2 and determining the mirror reflectance, which is the reflectance of the mirror 1, based on the luminance status of the captured image F. According to this configuration, since the mirror reflectance is determined based not on the light quantity sensor provided on the mirror but on the luminance of the image F captured by the camera 11 for capturing an image of a view behind the vehicle 2, the anti-glare control can be automatically performed without providing the light quantity sensor on the mirror 1, and an appropriate anti-glare can be realized.

### <VARIATION OF DEGREE OF LOCALITY DERIVING PROCESS>

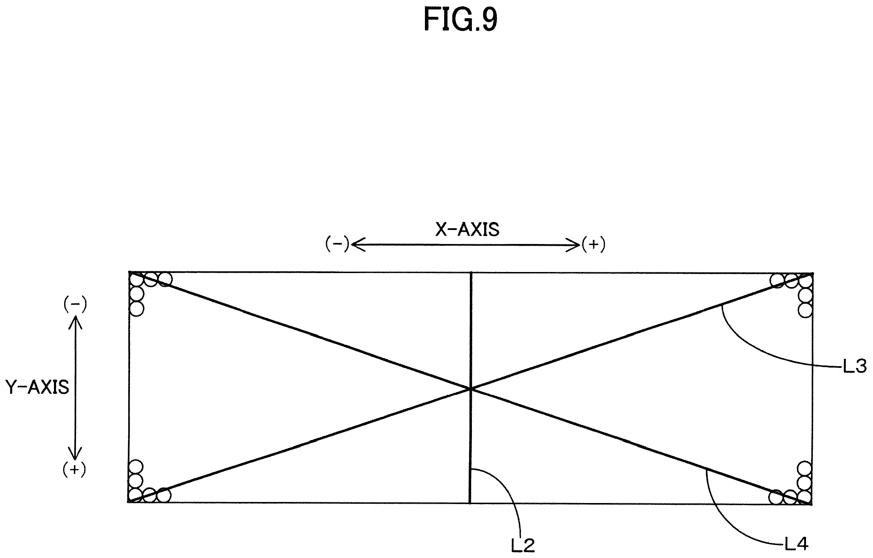

Next, a variation of the degree of locality deriving process (step SA2 of flowchart FA, flowchart FB) of the above embodiment will be described. In the above embodiment, a specific example of the method of determining the attention line by the control unit 13 has been described through the description of the attention line determining process (step SB1) included in the degree of locality deriving process. However, the method of determining the attention line by the control unit 13 is not limited to the method exemplified in the above embodiment. For example, the attention line may be a line of pixels G extending in the y-axis direction, such as a line L2 in FIG. 9. It may also be a line of pixels G extending obliquely with respect to the x-axis, such as a line L3 and a line L4 in FIG. 9. In addition, the attention line may be predetermined. In this case, the attention line may be appropriately determined based on the results of a prior test or simulation from the viewpoint of ensuring the appropriateness of the degree of locality (maximum luminance difference in the above embodiment) and the degree of darkness (line average value in the above embodiment) derived using the attention line.

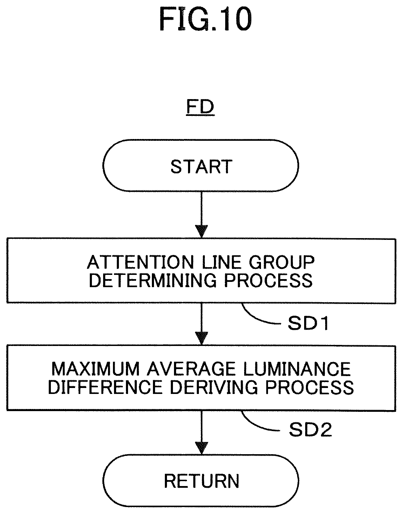

Further, the control unit 13 may be configured to execute the process of the flowchart FD shown in FIG. 10 in place of the processes of the flowchart FB in FIG. 4 concerning the derivation of the degree of locality. Hereinafter, a variation of executing the process of the flowchart FD will be referred to as a "first variation". Specifically, first, the control unit 13 executes the attention line group determining process (step SD1). The attention line group determining process is a process of determining the attention line group. The attention line group is a line group composed of a plurality of (five lines in the first variation) x-axis lines extending in the x-axis direction on the captured image F. In step SD1, the control unit 13 determines the attention line group by the following method. That is, the control unit 13 determines the attention line by the same method as described in the attention line determining process (step SB1) of the above embodiment. Next, the control unit 13 determines as the attention line group a group of five x-axis lines including the attention line and two x-axis lines in the y-axis plus direction and two x-axis lines in the y-axis minus direction centering on the attention line.

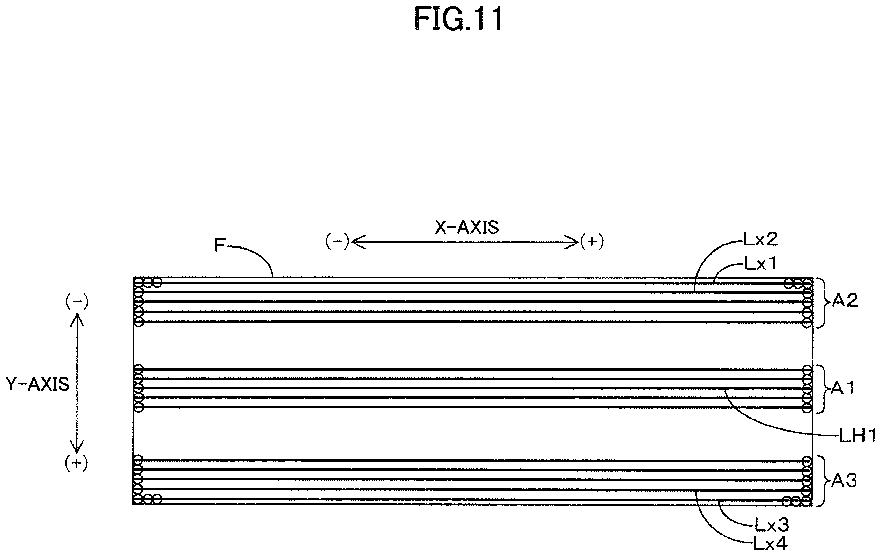

FIG. 11 is a view showing the captured image F in a manner suitable for explanation. For example, when the attention line is the attention line LH1, the control unit 13 determines a group of five x-axis lines belonging to the range A1 as the attention line group. Referring to FIG. 11, when the attention line is the x-axis line Lx1 located at the end in the y-axis minus direction of the captured image F or the x-axis line Lx2 located only one line from the x-axis line Lx1 in the y-axis plus direction, the control unit 13 determines five x-axis lines (a group of five x-axis lines belonging to the range A2 in FIG. 11) from the x-axis line Lx1 in the y-axis plus direction as the attention line group. Similarly, when the attention line is the x-axis line Lx3 located at the end in the y-axis plus direction of the captured image F or the x-axis line Lx4 located only one line from the x-axis line Lx3 in the y-axis minus direction, the control unit 13 determines five x-axis lines (a group of five x-axis lines belonging to the range A3 in FIG. 11) from the x-axis line Lx3 in the y-axis minus direction as the attention line group.

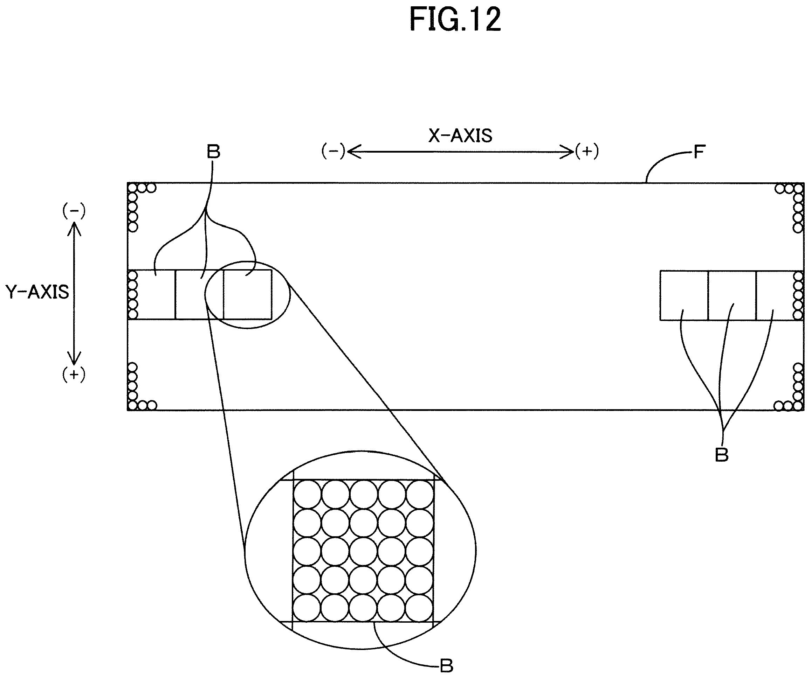

After processing step SD1, the control unit 13 executes the maximum average luminance difference deriving process (step SD2). The process of step SD2 will be described in detail below. FIG. 12 is a diagram used for explaining the process of step SD2. As shown in FIG. 12, the control unit 13 divides the group of attention lines into blocks B arranged side by side without gaps in the x-axis direction. One block B includes a total of 25 pixels G, five in the x-axis direction and five in the y-axis direction. If the number of pixels G in the x-axis direction of the target line group is not a multiple of five, the configuration of any one block B is modified.

Next, the control unit 13 derives an average value of the luminance of each pixel G of the block B. Next, the control unit 13 derives a "maximum average luminance difference" that is a difference between the average values of the block B having the largest average value and the block B having the smallest average value as the degree of locality. Here, there is a correlation between the magnitude of the maximum average luminance difference and the degree to which the situation that the rear part of the vehicle 2 is locally bright is satisfied (degree of locality) such that the degree of locality increases as the maximum average luminance difference increases. Therefore, the maximum average luminance difference can be used as an index value representing the degree of locality within a range of 0-255 pt, similar to the maximum luminance difference in the above embodiment. In the first variation, the control unit 13 executes various processes using the maximum average luminance difference instead of the maximum luminance difference as the degree of locality. The relation defining information is information defining the relation between the maximum average luminance difference and the mirror reflectance.

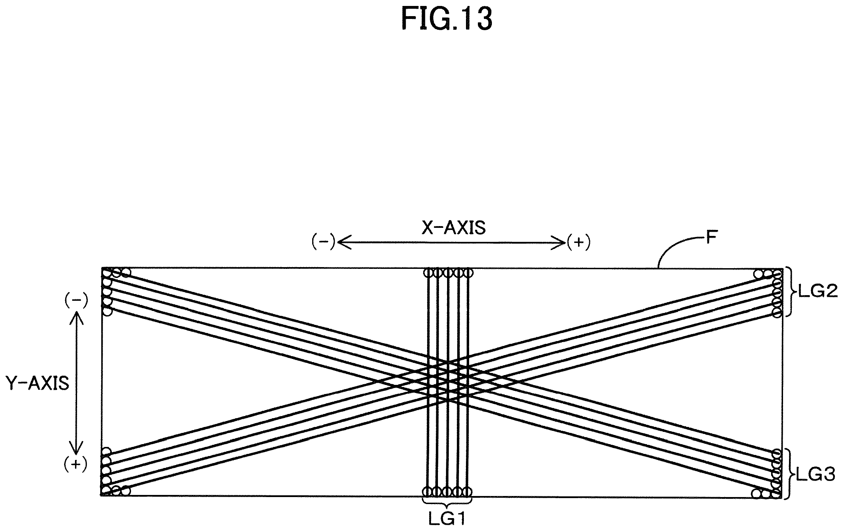

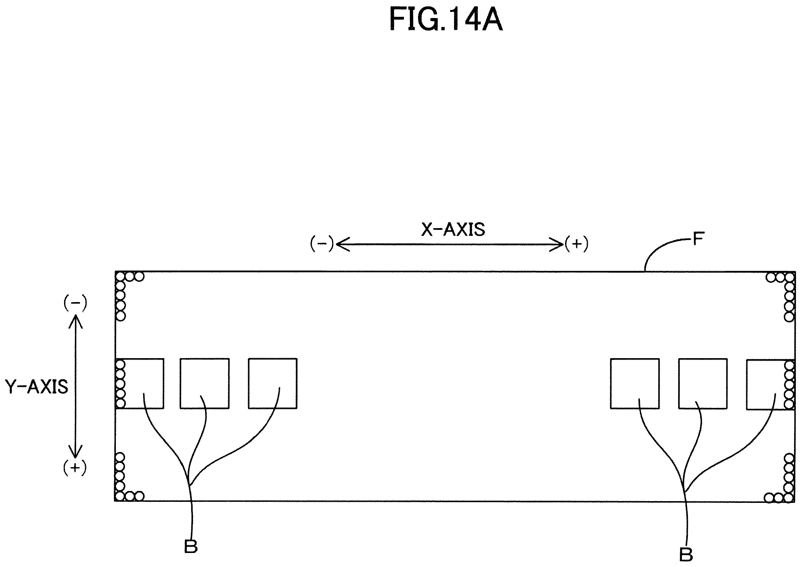

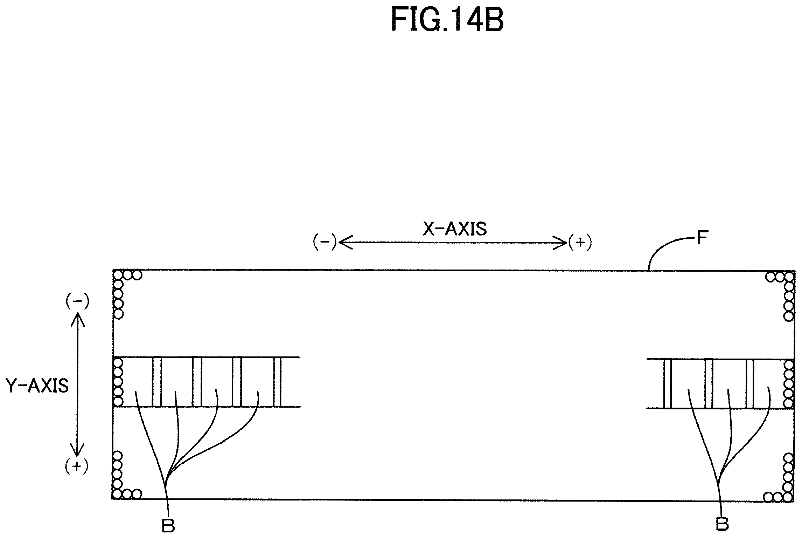

The first variation has been described above, and the following variation can be further adopted for the first variation. That is, the method for determining the group of attention lines is not limited to the exemplary method. For example, the group of attention lines may be a group of lines of pixels G extending in the y-axis direction as in the line group LG1 in FIG. 13. It may also be a group of lines of pixels G extending obliquely with respect to the x-axis as in the line group LG2 and the line group LG3 in FIG. 13. The group of attention lines may be predetermined. The number of pixels G included in the block B need not be "total of 25 units: five units in the x-axis direction and five units in the y-axis direction" (hereinafter, similar cases are expressed as 25: 5×5), but may be, for example, 9: 3×3 or 12: 4×6. It is not necessary for the blocks B to be arranged side by side without gaps on the group of interest lines, but the blocks B may be arranged side by side at intervals as in FIG. 14A. Further, there may be a portion overlapping adjacent blocks B as in FIG. 14B.

In addition, the content of the degree of locality is not limited to the content exemplified above. That is, the degree of locality is a degree that can be derived based on the luminance situation of the captured image F, and may be a degree of satisfying the situation that the rear part of the vehicle 2 is locally bright. The control unit 13 may use a model learned by a predetermined machine learning method for deriving the degree of locality.

### <VARIATION OF DEGREE OF DARKNESS DERIVING PROCES>

Next, a variation of the degree of darkness deriving process (step SA3) of the above embodiment will be described. In the above embodiment, the control unit 13 derives the line average value of the attention line as the degree of darkness. Note that the attention line can be determined by various methods as described above. However, the degree of darkness is not limited to the line average value of the attention line. For example, the control unit 13 may be configured to determine the attention line group and then derive the average value of the luminance of pixels constituting the attention line group as the degree of darkness. This configuration is particularly effective when the control unit 13 derives the degree of locality by the method described in the first variation. Alternatively, for example, the control unit 13 may derive the average value of the luminance of all pixels G constituting the captured image F as the degree of darkness. Alternatively, for example, the control unit 13 may identify a partial region of the captured image F by image processing and derive the average value of the luminance of pixels G belonging to the partial region as the degree of darkness.

### <VARIATION OF THE MIRROR REFLECTANCE DETERMINING PROCESS>

Next, a variation of the mirror reflectance determining process of the above embodiment will be described. In the above embodiment, the control unit 13 determines the mirror reflectance (applied mirror reflectance) using three kinds of relation defining information prepared in advance. However, the method by which the control unit 13 determines the mirror reflectance is not limited to the method exemplified in the above embodiment. For example, the control unit 13 may be configured to determine the mirror reflectance (applied mirror reflectance) using a "formula for inputting the degree of darkness and the degree of locality as parameters and outputting the mirror reflectance". This formula derives the mirror reflectance by a calculation method such that the reflectance decreases as the degree of locality increases when the degree of darkness is the same, and the reflectance decreases as the degree of darkness increases even when the degree of locality is the same.

In the first to third relation defining information, the relation between the maximum luminance difference and the mirror reflectance is proportional. However, the relation between the maximum luminance difference and the mirror reflectance is not limited to a proportional relation. The relation between the maximum luminance difference and the mirror reflectance should be appropriately determined from the viewpoint of realizing appropriate anti-glare state. For example, the curves CV1 to C3 in FIG. 8 may be curved or bent instead of being straight.

In addition, the control unit 13 may be configured not to use the degree of darkness when determining the applied mirror reflectance. In this configuration, the control unit 13 does not execute the process of deriving the degree of darkness. In this configuration, the control unit 13 executes, for example, the following process. For example, one type of relation defining information is prepared as the relation defining information. The control unit 13 uses one type of relation defining information prepared without deriving the degree of darkness to determine the degree of locality (maximum luminance difference in the above embodiment) as the applied mirror reflectance. Further, for example, the control unit 13 determines the mirror reflectance (applied mirror reflectance) by using "formula to output mirror reflectance with degree of locality input as parameter". This calculation formula derives the mirror reflectance by a calculation method in which the reflectance decreases as the degree of locality increases.

In addition, the method in which the control unit 13 determines the mirror reflectance based on the luminance situation of the captured image F is not limited to the method exemplified above. That is, the mirror reflectance may be derived by the control unit 13 in a method reflecting the luminance situation of the captured image F. In addition, the control unit 13 may be configured to use a model learned by a predetermined machine learning method when deriving the mirror reflectance.

Although an embodiment of the present invention (variations are included, the same shall apply hereinafter) has been described above, the above-described embodiment shows only one embodiment of the present invention and is not to be interpreted as limiting the technical scope of the present invention.

For example, although the function of displaying an image is not implemented in the mirror 1 in the above-described embodiment, the mirror 1 may be implemented with this function.

For example, in the above-described embodiment, the mirror reflectance of the mirror 1 is changed by the optical device 15. In this regard, the mirror reflectance may be changed by the electrochromic layer in place of the optical device 15.

For example, although a light quantity sensor is not provided in the mirror 1 in the above-described embodiment, the light quantity sensor may be provided. That is, in order to realize a function other than the automatic anti-glare function, it is naturally acceptable to provide one or more light quantity sensors in the mirror 1.

The functional blocks shown in the above-described embodiment can be realized by any hardware or by linking any hardware with any software. That is, these functional blocks are not limited to specific hardware. For example, when a functional block is configured by hardware and software, it can be configured as follows. That is, such a functional block includes a CPU, RAM, and ROM of a computer. In such a functional block, the CPU reads a program stored in a ROM or other recording medium into the RAM and executes the program.

For example, the control unit 13 may be configured to execute various processes in cooperation with an external device for the process described as being executed by the control unit 13 alone. As an example, the control unit 13 may execute the process in coordination with an external device (for example, a cloud server) communicable via a network.

The processing units in the flowchart of the above embodiment are divided according to the main processing contents in order to facilitate understanding of the process. The present invention is not limited by the method of division or the name of the processing unit. The processes of each apparatus may be further divided into many processing units according to the processing contents. One processing unit may be further divided into many processing units. If a similar process can be performed, the processing order of the above flowchart is not limited to the example shown in the figure.

For example, the provision of a program executed by the computer of the controller 10 may be included in the embodiment. The provision of a recording medium in which the program is recorded so as to be readable by the computer may be included in the embodiment. The recording medium may be a magnetic or optical recording medium or a semiconductor memory device. More specifically, a portable or fixed recording medium such as a flexible disk, an HDD (Hard Disk Drive), a CD-ROM (Compact Disk Read Only Memory), a DVD (Digital Versatile Disk), a Blu-ray (R) Disk, a magneto-optical disk, a flash memory, a card type recording medium, or the like.

## Claims

1. A controller (10) for performing processes related to a mirror (1) which is provided in a vehicle cabin (3) and configured to be capable of changing reflectance, comprising:
a control unit (13) configured to acquire a captured image (F) based on a result of imaging by a camera (11) configured to capture an image (F) of a view behind the vehicle (2); and to determine a mirror reflectance, which is the reflectance of the mirror (1), based on a state of luminance of the captured image (F),
wherein the control unit (13) is configured to:
derive a degree of locality, which is a degree to which a portion of a view behind the vehicle (2) is locally bright, based on the state of luminance of the captured image (F), and determine the mirror reflectance so that the larger the degree of locality,the smaller the reflectance, **characterized in that** the control unit (13) is configured to derive, as the degree of locality, a difference in luminance between a pixel (G) having largest luminance and a pixel (G) having smallest luminance among pixels (G) on an attention line (L1-L4, LH1, Lx1-Lx4, LG1-LG3), which is a line extending in a predetermined direction on the captured image (F).

2. The controller (10) according to claim 1, wherein the control unit (13) is configured to:
derive an average value of luminance of respective pixels (G) in a plurality of blocks (B) arranged side by side in a predetermined direction on a group of attention lines (LG1-LG3), which are lines extending in the predetermined direction in the captured image (F); and
derive a difference in average values between a block (B) having a largest average value and a block (B) having a smallest average value as the degree of locality.

3. The controller (10) according to one of claims 1 to 2, wherein the control unit (13) is configured to:
derive a degree of darkness, which is a degree of overall darkness of a scenery recorded in the captured image (F), based on the state of luminance of the captured image (F); and
determine the mirror reflectance so that the greater the degree of darkness, the smaller the reflectance, for the same degree of locality.

4. The controller (10) according to claim 3, wherein the control unit (13) is configured to prepare relation definition information (CV1-CV3) defining a relation between the degree of locality and the mirror reflectance for each level of the degree of darkness; and
the control unit (13) is configured to derive a level of the degree of darkness, and to determine the mirror reflectance using the relation definition information corresponding to the derived level.

5. The controller (10) according to claim 3 or 4, wherein the control unit (13) is configured to utilize a calculation formula to determine the mirror reflectance, the calculation formula having the degree of darkness and the degree of locality as input parameters, and outputting the mirror reflectance.

6. The controller (10) according to one of claims 3 to 5, wherein the control unit (13) is configured to derive an average value of luminance of pixels (G) composing an attention line (L1-L4, LH1, Lx1-Lx4, LG1-LG3), which is a line extending in a predetermined direction on the captured image (F) as the degree of darkness.

7. The controller (10) according to one of claims 3 to 6, wherein the controller (13) is configured to derive, as the degree of darkness an average value of luminance of pixels (G) composing a group of attention lines (LG1-LG3), which are a plurality of lines extending in a predetermined direction in the captured image (F).

8. A control system (12) comprising:
a mirror (1) provided in a vehicle cabin (3) and configured to be capable of changing a reflectance; and
a controller (10) according to one of the preceding claims configured to perform processes relating to the mirror (1).

9. A control method using a controller (10) configured to perform processes related to a mirror (1) provided in a vehicle cabin (3) and configured to be capable of changing reflectance, comprising:
a step (SA1) of acquiring a captured image (F) based on a result of imaging by a camera (11) configured to capture an image (F) of a view behind the vehicle (2);
a step (SA2) of deriving a degree of locality, which is a degree to which a portion of a view behind the vehicle (2) is locally bright, based on the state of luminance of the captured image (F), and a step (SA4) of determining a mirror reflectance, which is the reflectance of the mirror (1), based on a state of luminance of the captured image (F), so that the larger the degree of locality, the smaller the reflectance, characterized through deriving, as the degree of locality, a difference in luminance between a pixel (G) having largest luminance and a pixel (G) having smallest luminance among pixels (G) on an attention line (L1-L4, LH1, Lx1-Lx4, LG1-LG3), which is a line extending in a predetermined direction on the captured image (F).

## Patentansprüche

1. Steuergerät (10) zum Durchführen von Prozessen in Bezug auf einen Spiegel (1), der sich in einer Fahrzeugkabine (3) befindet und dazu ausgelegt ist, das Reflexionsvermögen ändern zu können, aufweisend:
eine Steuereinheit (13), die dazu ausgelegt ist, ein aufgenommenes Bild (F) auf Grundlage eines Ergebnisses der Bildgebung durch eine Kamera (11) zu erlangen, die dazu ausgelegt ist, ein Bild (F) einer Ansicht hinter dem Fahrzeug (2) aufzunehmen; und ein Spiegelreflexionsvermögen, das das Reflexionsvermögen des Spiegels (1) ist, auf Grundlage eines Zustands der Leuchtdichte des aufgenommenen Bildes (F) zu bestimmen,
wobei die Steuereinheit (13) ausgelegt ist zum:
Ableiten eines Lokalitätsgrades, der ein Grad ist, zu dem ein Teil einer Ansicht hinter dem Fahrzeug (2) lokal hell ist, auf Grundlage des Leuchtdichtezustandes des aufgenommenen Bildes (F), und Bestimmen des Spiegelreflexionsvermögens, sodass das Reflexionsvermögen umso geringer ist, je größer der Lokalitätsgrad ist, **dadurch gekennzeichnet, dass**
die Steuereinheit (13) dazu ausgelegt ist, als den Lokalitätsgrad, eine Differenz in der Leuchtdichte zwischen einem Pixel (G) mit der größten Leuchtdichte und einem Pixel (G) mit der kleinsten Leuchtdichte von Pixeln (G) auf einer Aufmerksamkeitslinie (L1-L4, LH1, Lx1-Lx4, LG1-LG3) abzuleiten, die eine Linie ist, die sich in einer vorbestimmten Richtung in dem aufgenommenen Bild (F) erstreckt.

2. Steuergerät (10) nach Anspruch 1, wobei die Steuereinheit (13) ausgelegt ist zum:
Ableiten eines Mittelwerts der Leuchtdichte der jeweiligen Pixel (G) in einer Mehrzahl von Blöcken (B), die in einer vorbestimmten Richtung auf einer Gruppe von Aufmerksamkeitslinien (LG1-LG3) Seite an Seite angeordnet sind, wobei es sich um Linien handelt, die sich in der vorbestimmten Richtung in dem aufgenommenen Bild (F) erstrecken; und
Ableiten einer Differenz in den Mittelwerten zwischen einem Block (B) mit dem größten Mittelwert und einem Block (B) mit dem kleinsten Mittelwert als Lokalitätsgrad.

3. Steuergerät (10) nach einem der Ansprüche 1 bis 2, wobei die Steuereinheit (13) ausgelegt ist zum:
Ableiten eines Dunkelheitsgrads, der ein Grad der Gesamtdunkelheit einer in dem aufgenommenen Bild (F) aufgezeichneten Szenerie ist, auf Grundlage des Leuchtdichtezustandes des aufgenommenen Bildes (F); und
Bestimmen des Spiegelreflexionsvermögens derart, dass bei gleichem Lokalitätsgrad das Reflexionsvermögen umso geringer ist, je größer der Dunkelheitsgrad ist.

4. Steuergerät (10) nach Anspruch 3, wobei die Steuereinheit (13) dazu ausgelegt ist, Beziehungsdefinitionsinformationen (CV1-CV3) zu erstellen, die eine Beziehung zwischen dem Lokalitätsgrad und dem Spiegelreflexionsvermögen für jede Stufe des Dunkelheitsgrades definieren; und
wobei die Steuereinheit (13) dazu ausgelegt ist, eine Stufe des Dunkelheitsgrads abzuleiten und das Spiegelreflexionsvermögen unter Verwendung der Beziehungsdefinitionsinformationen zu bestimmen, die der abgeleiteten Stufe entsprechen.

5. Steuergerät (10) nach Anspruch 3 oder 4, wobei die Steuereinheit (13) dazu ausgelegt ist, eine Berechnungsformel zu verwenden, um das Spiegelreflexionsvermögen zu bestimmen, wobei die Berechnungsformel den Dunkelheitsgrad und den Lokalitätsgrad als Eingabeparameter hat, und das Spiegelreflexionsvermögen auszugeben.

6. Steuergerät (10) nach einem der Ansprüche 3 bis 5, wobei die Steuereinheit (13) dazu ausgelegt ist, einen Mittelwert der Leuchtdichte von Pixeln (G), die eine Aufmerksamkeitslinie (L1-L4, LH1, Lx1-Lx4, LG1-LG3) bilden, die eine Linie ist, die sich in einer vorbestimmten Richtung in dem aufgenommenen Bild (F) erstreckt, als den Dunkelheitsgrad abzuleiten.

7. Steuergerät (10) nach einem der Ansprüche 3 bis 6, wobei die Steuereinheit (13) dazu ausgelegt ist, als den Dunkelheitsgrad einen Mittelwert der Leuchtdichte von Pixeln (G) abzuleiten, die eine Gruppe von Aufmerksamkeitslinien (LG1-LG3) bilden, die eine Mehrzahl von Linien sind, die sich in einer vorbestimmten Richtung in dem aufgenommenen Bild (F) erstrecken.

8. Steuersystem (12), aufweisend:
einen Spiegel (1), der sich in einer Fahrzeugkabine (3) befindet und dazu ausgelegt ist, ein Reflexionsvermögen ändern zu können; und
ein Steuergerät (10) nach einem der vorhergehenden Ansprüche, das dazu ausgelegt ist, Prozesse in Bezug auf den Spiegel (1) durchzuführen.

9. Steuerungsverfahren unter Verwendung eines Steuergeräts (10), das dazu ausgelegt ist, Prozesse in Bezug auf einen Spiegel (1) durchzuführen, der sich in einer Fahrzeugkabine (3) befindet und dazu ausgelegt ist, das Reflexionsvermögen ändern zu können, aufweisend:
einen Schritt (SA1) des Erlangens eines aufgenommenen Bildes (F) auf Grundlage eines Ergebnisses der Bildgebung durch eine Kamera (11), die dazu ausgelegt ist, ein Bild (F) einer Ansicht hinter dem Fahrzeug (2) aufzunehmen;
einen Schritt (SA2) des Ableitens eines Lokalitätsgrades, der ein Grad ist, zu dem ein Teil einer Ansicht hinter dem Fahrzeug (2) lokal hell ist, auf Grundlage des Leuchtdichtezustandes des aufgenommenen Bildes (F), und
einen Schritt (SA4) des Bestimmens eines Spiegelreflexionsvermögens, das das Reflexionsvermögen des Spiegels (1) ist, auf Grundlage eines Leuchtdichtezustandes des aufgenommenen Bildes (F), sodass das Reflexionsvermögen umso geringer ist, je größer der Lokalitätsgrad ist, **gekennzeichnet durch**
das Ableiten, als den Lokalitätsgrad, einer Differenz in der Leuchtdichte zwischen einem Pixel (G) mit der größten Leuchtdichte und einem Pixel (G) mit der kleinsten Leuchtdichte von Pixeln (G) auf einer Aufmerksamkeitslinie (L1-L4, LH1, Lx1-Lx4, LG1-LG3), die eine Linie ist, die sich in einer vorbestimmten Richtung in dem aufgenommenen Bild (F) erstreckt.

## Revendications

1. Un contrôleur (10) pour effectuer des processus liés à un miroir (1) qui est situé dans l'habitacle d'un véhicule (3) et configuré pour pouvoir changer de réflectance, comprenant :
une unité de commande (13) configurée pour acquérir une image capturée (F) basée sur le résultat de la prise de vue par une caméra (11) configurée pour capturer une image (F) de la vue derrière le véhicule (2) ; et pour déterminer une réflectance du miroir, qui est la réflectance du miroir (1), basée sur l'état de luminance de l'image capturée (F),
**caractérisé en ce que** l'unité de commande (13) est configurée pour :
dériver un degré de localité, qui est un degré auquel une partie de la vue derrière le véhicule (2) est localement brillante, en fonction de l'état de luminance de l'image capturée (F), et déterminer la réflectance du miroir de sorte que, plus le degré de localité est élevé, plus la réflectance est faible, **caractérisé en ce que** l'unité de commande (13) est configurée pour dériver, en tant que degré de localité, une différence de luminance entre un pixel (G) ayant la plus grande luminance et un pixel (G) ayant la plus faible luminance parmi les pixels (G) sur une ligne d'attention (L1-L4, LH1, Lx1-Lx4, LG1-LG3), qui est une ligne s'étendant dans une direction prédéterminée sur l'image capturée (F).

2. Le contrôleur (10) selon la revendication 1, où l'unité de commande (13) est configurée pour :
dériver une valeur moyenne de luminance des pixels (G) respectifs dans plusieurs blocs (B) arrangés côte à côte dans une direction prédéterminée sur un groupe de lignes d'attention (LG1-LG3), qui sont des lignes s'étendant dans la direction prédéterminée dans l'image capturée (F) ; et
dériver une différence de valeurs moyennes entre un bloc (B) ayant la plus grande valeur moyenne et un bloc (B) ayant la plus petite valeur moyenne comme degré de localité.

3. Le contrôleur (10) selon l'une des revendications 1 à 2, où l'unité de commande (13) est configurée pour :
dériver un degré de noirceur, qui est un degré de noirceur global d'un paysage enregistré dans l'image capturée (F), en fonction de l'état de luminance de l'image capturée (F); et
déterminer la réflectance du miroir de sorte que, plus le degré de noirceur est élevé, plus la réflectance est faible, pour le même degré de localité.

4. Le contrôleur (10) selon la revendication 3, où l'unité de commande (13) est configurée pour préparer des informations de définition de relation (CV1-CV3) définissant une relation entre le degré de localité et la réflectance du miroir pour chaque niveau de degré de noirceur ; et
l'unité de commande (13) est configurée pour dériver un niveau du degré de noirceur, et pour déterminer la réflectance du miroir en utilisant les informations de définition de relation correspondant au niveau dérivé.

5. Le contrôleur (10) selon la revendication 3 ou 4, où l'unité de commande (13) est configurée pour utiliser une formule de calcul pour déterminer la réflectance du miroir.
la réflectance du miroir, la formule de calcul ayant comme paramètres d'entrée le degré de noirceur et le degré de localité, et donnant en sortie la réflectance du miroir.

6. Le contrôleur (10) selon l'une des revendications 3 à 5, où l'unité de commande (13) est configurée pour dériver une valeur moyenne de luminance des pixels (G) composant une ligne d'attention (L1-L4, LH1, Lx1-Lx4, LG1-LG3), qui est une ligne s'étendant dans une direction prédéterminée sur l'image capturée (F) en tant que degré de noirceur.

7. Le contrôleur (10) selon l'une des revendications 3 à 6, où l'unité de commande (13) est configurée pour dériver, en tant que degré de noirceur, une valeur moyenne de luminance des pixels (G) composant un groupe de lignes d'attention (LG1-LG3), qui sont une pluralité de lignes s'étendant dans une direction prédéterminée sur l'image capturée (F).

8. Un système de contrôle (12) comprenant :
un miroir (1) situé dans l'habitacle d'un véhicule (3) et configuré pour pouvoir changer de réflectance ; et
un contrôleur (10) selon l'une des revendications précédentes configuré pour effectuer des processus liés au miroir (1).

9. Un procédé de contrôle utilisant un contrôleur (10) configuré pour effectuer des processus liés à un miroir (1) situé dans l'habitacle d'un véhicule (3) et configuré pour pouvoir changer de réflectance, comprenant :
une étape (SA1) d'acquisition d'une image capturée (F) basée sur le résultat de la prise de vue par une caméra (11) configurée pour capturer une image (F) de la vue derrière le véhicule (2) ;
une étape (SA2) de dérivation d'un degré de localité, qui est un degré auquel une partie de la vue derrière le véhicule (2) est localement brillante, en fonction de l'état de luminance de l'image capturée (F), et une étape (SA4) de détermination de la réflectance du miroir, qui est la réflectance du miroir (1), en fonction de l'état de luminance de l'image capturée (F), de sorte que plus le degré de localité est élevé, plus la réflectance est faible, **caractérisé par** la dérivation,
en tant que degré de localité, d'une différence de luminance entre un pixel (G) ayant la plus grande luminance et un pixel (G) ayant la plus faible luminance parmi les pixels (G) sur une ligne d'attention (L1-L4, LH1, Lx1-Lx4, LG1-LG3), qui est une ligne s'étendant dans une direction prédéterminée sur l'image capturée (F)
